# EUROPEAN PATENT SPECIFICATION

(11) **EP 4 481 886 B1**
(45) Date of publication and mention of the grant of the patent: **31.12.2025**
(21) Application number: 23886253.6
(22) Date of filing: 01.11.2023
(51) Int. Cl.: H01M 10/42, G01N 3/303, G01M 7/08

(54) **IMPACT TEST METHOD FOR CYLINDRICAL BATTERY CELLS AND IMPACT TEST DEVICE FOR CYLINDRICAL BATTERY CELLS THEREFOR**
STOSSTESTVERFAHREN FÜR ZYLINDRISCHE BATTERIEZELLEN UND STOSSTESTVORRICHTUNG FÜR ZYLINDRISCHE BATTERIEZELLEN DAFÜR
PROCÉDÉ DE TEST D'IMPACT POUR ÉLÉMENTS DE BATTERIE CYLINDRIQUES ET DISPOSITIF DE TEST D'IMPACT POUR ÉLÉMENTS DE BATTERIE CYLINDRIQUES ASSOCIÉS

(30) Priority: 01.11.2022 KR 20220144009
(43) Date of publication of application: 25.12.2024
(73) Proprietor: LG Energy Solution, Ltd., Seoul 07335 (KR)
(72) Inventor: KIM, Min Geun, Daejeon 34122 (KR); TAE, Young Ji, Daejeon 34122 (KR); KIM, Hyoung Kwon, Daejeon 34122 (KR); YUN, Kwi Sub, Daejeon 34122 (KR); LEE, Kwang Soo, Daejeon 34122 (KR); JEONG, Ji Woo, Daejeon 34122 (KR); BYUN, Jin Seul, Daejeon 34122 (KR); KIM, Seong Hyun, Daejeon 34122 (KR)
(74) Representative: Goddar, Heinz J.
(86) International application number: PCT/KR2023/017225
(87) International publication number: WO 2024/096557

(56) References cited:
- CN-A- 103 674 460
- CN-A- 104 132 794
- CN-U- 206 269 987
- CN-U- 209 181 991
- KR-A- 20170 105 415
- KR-A- 20180 037 886
- KR-B1- 102 132 980

## Description

### [Technical Field]

This application claims the benefit of priority to Korean Patent Application No. 2022-0144009 filed on November 1, 2022, the disclosure of which is incorporated herein by reference in its entirety.

The present invention relates to a cylindrical battery cell impact test method and a cylindrical battery cell impact test apparatus therefor. More particularly, the present invention relates to an impact test method of applying a predetermined level of impact to a side surface of a cylindrical battery cell to check whether a battery can explode and an impact test apparatus therefor.

### [Background Art]

Depending on the shape of a battery case, lithium secondary batteries may be classified as a cylindrical battery cell having an electrode assembly mounted in a cylindrical metal can, a prismatic battery cell having an electrode assembly mounted in a prismatic metal can, or a pouch-shaped battery cell having an electrode assembly mounted in a pouch-shaped case made of an aluminum laminate sheet. Thereamong, the cylindrical battery cell has the advantages of relatively large capacity and structural safety.

A lithium secondary battery may explode under strong external impact. In addition, a case may be physically broken and opened by external impact, or short circuit may occur in a battery due to impact, and the battery may overheat and gas may be generated in the battery as the result of short circuit. Since the lithium secondary battery is a device configured to store energy at high density, various tests are required to prevent safety-related accidents. An impact test, in which a heavy object is dropped, is the most representative of these tests.

The impact test is a test that complies with UL Standard 1642 and/or 2054. The impact test is performed by disposing a metal rod having a diameter of 15.8 mm on a side surface of a cylindrical battery cell so as to be perpendicular to the central axis of the cylindrical battery cell, dropping a weight of 9.1 kg (about 20 pounds) from a height of 610±25 mm from the battery cell onto an upper surface of the metal rod, and observing the state of the cylindrical battery cell.

The impact test is performed on five samples, and a product is determined to be good only when all five samples do not burst. Therefore, the same level of impact should be applied to all five samples in order to increase a possibility that the product is determined to be good.

"Not burst" means that a case of the cylindrical battery cell must not open. For example, a cap assembly must not be separated from the battery cell, and a side surface of a battery case must not be torn. "Burst" includes both that the case is opened by simple physical impact and/or that an electrode assembly is broken by physical impact and the case of the battery cell is secondarily opened as the result of the breakage.

Conventionally, an impact test is performed by disposing a metal rod on a side surface of a cylindrical battery cell and dropping a weight onto the metal rod. Since the side surface of the battery cell is curved, one end of the metal rod is in contact with a base, a central portion of the metal rod is in contact with the side surface of the battery cell, and the other end of the metal rod is inclined upward. As a result, the position of the metal rod on the side surface of the cylindrical battery cell may vary, and the degree of inclination of the metal rod may vary, resulting in the problem that the same level of impact is not applied to battery cells.

When the weight drops onto the inclined metal rod, a relatively high part of the metal rod primarily comes into contact with the weight, whereby impact is transferred to the relatively high part of the metal rod. A relatively low part of the metal rod is subjected to the repulsive force of the weight raised by the impact due to the primary contact. In this case, not all of the impact of the weight may be transferred to the cylindrical battery cell. Furthermore, it may be difficult to keep the level of the impact applied to the cylindrical battery cell constant.

Therefore, there is a need for an impact test method and an impact test apparatus capable of improving accuracy and reliability of the impact test.

Patent Document 1 discloses a battery cell impact test apparatus configured such that, when a second driving portion is lowered toward the top of a cylindrical battery cell, an impact portion provided under the second driving portion presses one side of the battery cell.

In Patent Document 1, a method of calculating the distance from the second driving portion to the bottom of a chamber in which the cylindrical battery cell is disposed using a laser sensor is used, and the height of the second driving portion is adjusted based on the distance measurement result of the laser sensor. Consequently, it is possible to repeatedly press one side of the cylindrical battery cell, and therefore it is possible to improve precision and reliability of experiments.

Patent Document 1 discloses a method of applying uniform impact to a cap assembly of the cylindrical battery cell when the impact test is performed, but does not disclose a method of uniformly applying impact to a side surface of the cylindrical battery cell.

Patent Document 2 discloses a method different from UL Standard 1642 and/or 2054, wherein an impact test is performed using two shafts and a round rod configured to be driven upward and downward along the shafts. Each shaft may be provided with a recessed rail. In Patent Document 2, the round rod is dropped, which is different from the international standard method, and the impact amount is reduced or changed by the friction force of the round rod moving along the shafts.

Therefore, there is a need for a method and apparatus capable of, when performing an impact test to check for explosion by applying impact to a side surface of a cylindrical battery cell according to international standards, preventing deviation of a metal rod due to a weight and improving reliability of the impact test by applying the same level of impact even though the test is repeated several times.

### (Prior Art Documents)

(Patent Document 1) Korean Patent Application Publication No. 2014-0000398 (2014.01.03)
(Patent Document 2) Korean Registered Patent Publication No. 2132980 (2020.07.06)

A further battery impact test is known from KR 2017 0105415 A.

### [Disclosure]

### [Technical Problem]

The present invention has been made in view of the above problems, and it is an object of the present invention to provide a cylindrical battery cell impact test method configured such that, during an impact test in which impact is applied to a side surface of a cylindrical battery cell, the contact state between a metal rod and the cylindrical battery cell is maintained, whereby the impact of a weight is directly transferred to the cylindrical battery cell, and a cylindrical battery cell impact test apparatus therefor.

### [Technical Solution]

A cylindrical battery cell impact test method according to the present invention to accomplish the above object may include disposing a cylindrical battery cell such that a side surface of the cylindrical battery cell rests on a base; disposing a metal rod above the side surface of the cylindrical battery cell; and dropping a weight toward the metal rod, wherein a magnetic portion added to an outer surface of the metal rod is disposed in contact with the side surface of the cylindrical battery cell.

Opposite ends of the metal rod may be disposed above the side surface of the cylindrical battery cell in a state of being mounted to a first guide and a second guide, respectively.

A central axis of the metal rod may be disposed orthogonally to a central axis of the cylindrical battery cell.

The magnetic portion may be formed on an outer surface of a part of a central portion of the metal rod in a longitudinal direction.

The cylindrical battery cell impact test method may further include adjusting positions of the opposite ends of the metal rod by the first guide and the second guide such that distances from the opposite ends of the metal rod to the base are uniform.

The metal rod may include a first guide movement portion and a second guide movement portion at the opposite ends thereof, respectively, such that that the metal rod is movable upward and downward while the metal rod is maintained in a horizontal state, and the first guide movement portion and the second guide movement portion may move upward and downward along interiors of the first guide and the second guide, respectively.

The magnetic portion of the metal rod and the side surface of the cylindrical battery cell may remain in contact throughout the entire process of the step in which the weight is dropped onto the metal rod.

A cylindrical battery cell impact test apparatus for the cylindrical battery cell impact test method may include a base configured for placement of a cylindrical battery cell on an upper surface thereof; a metal rod disposed on a side surface of the cylindrical battery cell; and a weight dropping toward the metal rod, wherein a magnetic portion is provided at a central portion of the metal rod.

The cylindrical battery cell impact test apparatus may further include a first guide and a second guide mounted respectively to opposite ends of the metal rod, each of the first guide and the second guide being configured to adjust the height of the metal rod.

Each of the first guide and the second guide may include a scale for measuring the height of the metal rod.

The opposite ends of the metal rod may include a first guide movement portion and a second guide movement portion, respectively, such that that the metal rod is movable upward and downward while the metal rod is maintained in a horizontal state, and the first guide movement portion and the second guide movement portion may move upward and downward along interiors of the first guide and the second guide, respectively.

Each of the first guide and the second guide may include an up-and-down adjustment portion configured to adjust the height of the metal rod, and the up-and-down adjustment portion may be configured as a long bolt disposed above the metal rod.

Each of the first guide and the second guide may include an up-and-down adjustment portion configured to adjust the height of the metal rod, and the up-and-down adjustment portion may include an elastic member disposed above the metal rod and an adjustment portion provided at an upper part of the elastic member, the adjustment portion being configured to adjust the length of the elastic member.

The metal rod may include a level located at an outer surface of the metal rod.

The metal rod may be cylinder-shaped or a polygonal column.

The magnetic portion may a permanent magnet added to an outer surface of the metal rod or an electromagnet added to an outer surface of the metal rod.

The base may include a cylindrical battery cell mounting portion.

In addition, the present invention may provide various combinations of the above solving means.

### [Advantageous Effects]

As is apparent from the above description, according to the present invention, the contact state between a cylindrical battery cell and a metal rod may be maintained even though a weight is dropped onto the metal rod, whereby the amount of impact of the weight applied to the metal rod may be transferred to the cylindrical battery cell without being dissipated.

In addition, since the weight is dropped in the state in which the metal rod is disposed above a side surface of the cylindrical battery cell so as to be parallel to a base, the level of the impact applied to the cylindrical battery cell may be maintained uniform over repeated experiments.

### [Description of Drawings]

FIG. 1 is a perspective view of a cylindrical battery cell impact test apparatus according to a first embodiment of the present invention.
FIG. 2 is an enlarged perspective view of a metal rod in FIG. 1.
FIG. 3 is a vertical sectional view taken along A-A of FIG. 2.
FIG. 4 is a perspective view showing the state in which a level is added to the metal rod in FIG. 2.
FIG. 5 is a perspective view of a base having a cylindrical battery cell mounting portion formed therein.
FIG. 6 is a perspective view of a cylindrical battery cell impact test apparatus according to a second embodiment of the present invention.
FIG. 7 is a perspective view of a metal rod according to a third embodiment of the present invention.
FIG. 8 is a vertical sectional view of the metal rod, taken along X-X of FIG. 7.
FIG. 9 is a vertical sectional view of the metal rod, taken along Y-Y of FIG. 7.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the drawings.

In all embodiments of the present invention, a metal rod, a weight, and the drop height of the weight may be a metal rod having a diameter of 15.8 mm, a weight of 9.1 kg (about 20 pounds), and a height of 610±25 mm from a battery cell, which comply with international standards.

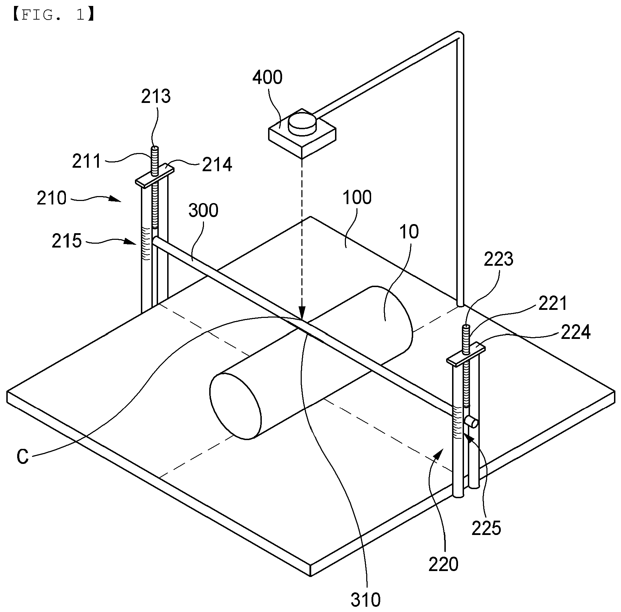

An 18650 cylindrical battery, which has a diameter of 18 mm, may be formed in a cylindrical shape having a diameter similar to the diameter of the metal rod, which is 15.8 mm. In FIGs. 1 to 9, however, a cylindrical battery cell, a metal rod, and a weight are partially emphatically shown, not in proportion to the actual sizes. The width, depth, and height of the weight are about 100 mm, 100 mm, and 100 mm, respectively. In reality, therefore, the volume of the weight is greater than the volume of the 18650 cylindrical battery.

In addition, a part configured to fix the weight shown in FIGs. 1 to 9 may be any device capable of dropping the weight from a predetermined height as an example. For example, various variations, such as fixing the weight using a hook and then dropping the weight, placing the weight on a fixture and then pushing the weight downward, and fixing the weight using an electromagnet and then dropping the weight, are possible.

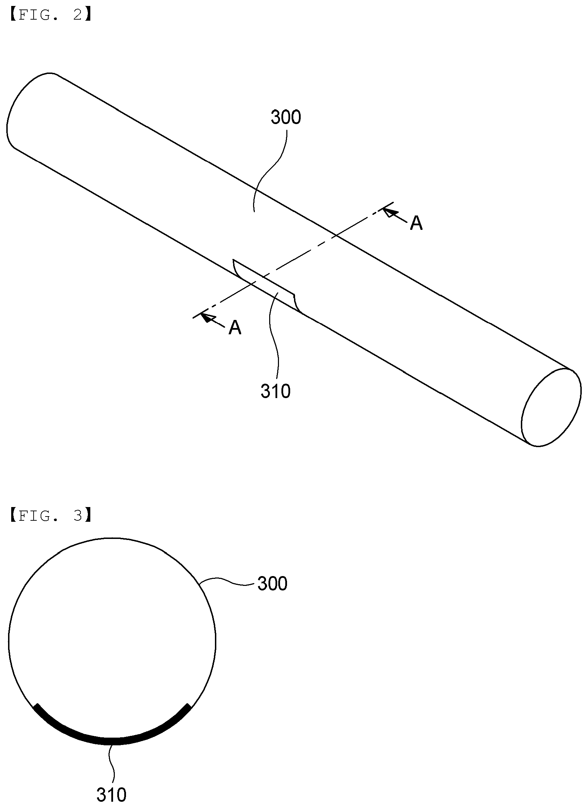

FIG. 1 is a perspective view of a cylindrical battery cell impact test apparatus according to a first embodiment of the present invention, FIG. 2 is an enlarged perspective view of a metal rod in FIG. 1, and FIG. 3 is a vertical sectional view taken along A-A of FIG. 2.

Referring to FIGs. 1 to 3, the cylindrical battery cell impact test apparatus according to the present invention includes a base 100 configured to allow a cylindrical battery cell 10 to be disposed on an upper surface thereof, a metal rod 300 disposed above a side surface of the cylindrical battery cell 10, a first guide 210 and a second guide 220 mounted respectively to opposite ends of the metal rod 300, each of the first guide and the second guide being configured to adjust the height of the metal rod 300, and a weight 400 configured to drop toward the metal rod 300.

The metal rod 300 is disposed at the side surface of the cylindrical battery cell 10 in the state in which opposite ends of the metal rod are mounted to the first guide 210 and the second guide 220, respectively, and is disposed such that the central axis of the metal rod 300 and the central axis of the cylindrical battery cell 10 are orthogonal to each other.

A simpler form than the first embodiment of the present invention is also possible in which the first guide 210 and the second guide 220 are omitted. In this case, in the same manner as in a conventional method, one end of the metal rod 300 may be in contact with the base 100, a central portion of the metal rod may be in contact with the side surface of the cylindrical battery cell 10, which is curved, and the other end of the metal rod may be inclined upward. When a magnetic portion 310 of the metal rod 300 is strong, as described below, the metal rod 300 may be maintained in a horizontal state even though the first guide 210 and the second guide 220 are omitted.

The present invention relates to an impact test method of determining whether the cylindrical battery cell 10 bursts when the weight 400 is dropped toward the interface between the cylindrical battery cell 10 and the metal rod 300 in the state in which the cylindrical battery cell 10 is disposed such that the side surface of the cylindrical battery cell rests on the base 100 and the metal rod 300 is disposed on the side surface of the cylindrical battery cell 10 or above the side surface of the cylindrical battery cell. When the cylindrical battery cell 10 bursts, the cylindrical battery cell is determined to be a defective battery cell, and when the cylindrical battery cell 10 does not burst, the cylindrical battery cell is determined to be a normal battery cell.

Preferably, the metal rod 300 remains in contact with the side surface of the cylindrical battery cell 10 such that, when the weight 400 and the metal rod 300 collide with each other, bouncing up of the metal rod 300 is prevented or movement of the weight 400 in contact with the cylindrical battery cell 10 is prevented, whereby the magnitude of the gravitational impact of the weight 400 is directly transferred to the cylindrical battery cell 10.

In the present invention, therefore, a magnetic portion 310 is added to at least a part of an outer surface of the metal rod 300 such that contact between the metal rod 300 and the cylindrical battery cell 10 can be maintained by magnetic force.

For example, the magnetic portion 310 may be added to the entirety of the outer surface of the metal rod 300, or the magnetic portion 310 may be formed on an outer surface of a part of a central portion of the metal rod 300 in a longitudinal direction.

In the structure in which the magnetic portion 310 is added to the entirety of the outer surface of the metal rod 300, it is not necessary to consider the position of the magnetic portion 310 formed on the metal rod 300 when the metal rod 300 is disposed on the side surface of the cylindrical battery cell 10. Even though the metal rod 300 attached to the outer surface of the cylindrical battery cell 10 is inclined or even though the part of the metal rod 300 in contact with the cylindrical battery cell 10 deviates from the center of the metal rod 300, contact between the metal rod 300 and the cylindrical battery cell 10 may be maintained during the impact test.

In the structure in which the magnetic portion 310 is added to an outer surface of a part of the central portion of the metal rod 300 in the longitudinal direction, when a contact surface is formed between the maximum protrusion of the side surface of the cylindrical battery cell and the magnetic portion 310 in the state in which the cylindrical battery cell 10 is disposed such that the side surface of the cylindrical battery cell rests on the base 100, equilibrium of the metal rod 300 may be maintained based on the contact surface, and the distances from the opposite ends of the metal rod 300 to the base 100 may be uniform. In addition, when the magnetic portion 310 is sufficiently strong, the metal rod 300 may be maintained in a horizontal state even though the first guide 210 and the second guide 220 are omitted. Even though the impact test is performed on a plurality of samples while changing the cylindrical battery cell 10, therefore, the magnitude of impact applied to the metal rod 300 may be maintained uniform.

In the structure in which the magnetic portion 310 is added to a part of the outer surface of the metal rod 300, no step or groove is formed at the boundary between the surface of the magnetic portion 310 and the surface of the metal rod 300 surrounding the magnetic portion 310, and in the section of the metal rod 300 as shown in FIG. 3, the diameter of the metal rod 300 at the part where the magnetic portion 310 is present is the same as the diameter of the metal rod 300 at the part where the magnetic portion 310 is absent.

For example, the magnetic portion 310 may be configured as a permanent magnet or an electromagnet added to the outer surface of the metal rod.

The metal rod is shown as having the shape of a cylinder in FIGs. 1 to 3; however, the shape of the metal rod described in the present invention is not limited to a cylindrical shape, and the metal rod may also be formed in the shape of a polygonal column.

As shown by dotted lines in FIG. 1, a longitudinal central axis and a transverse central axis may be marked on the base 100, and the positions of the weight 400 and the cylindrical battery cell 10 may be adjusted such that the drop point of the weight 400 and the part of the cylindrical battery cell 10 to which impact is applied lie at the intersection C of the longitudinal central axis and the transverse central axis.

Opposite ends of the metal rod 300 may be mounted to the first guide 210 and the second guide 220, respectively, and when the metal rod 300 is disposed such that the center of the metal rod 300 lies on the side surface of the cylindrical battery cell 10 disposed on the base 100 and the opposite ends of the metal rod 300 are pressed with uniform force from top to bottom, the metal rod 300 and the base 100 may be parallel to each other. In this way, the first guide 210 and the second guide 220 may adjust the positions of the opposite ends of the metal rod 300 such that that the distances from the opposite ends of the metal rod 300 to the base 100 are uniform.

A first scale 215 is formed on a side surface of the first guide 210 and a second scale 225 is formed on a side surface of the second guide 220 such that the height of the metal rod 300 from the base 100 can be visually checked.

In the first embodiment, the first guide 210 and the second guide 220 respectively include a first up-and-down adjustment portion and a second up-and-down adjustment portion each configured to adjust the height of the metal rod 300.

The first up-and-down adjustment portion is configured such that a first long bolt 211 is disposed so as to extend through an upper end 214 of the first guide and a lower end of the first long bolt 211 is in contact with the metal rod 300. The height of the first long bolt 211 may be adjusted using a screwdriver or a wrench that fits into a screw head or a recess formed at an upper end 213 of the first long bolt 211 in order to level the metal rod 300. The second up-and-down adjustment portion is configured such that a second long bolt 221 is disposed so as to extend through an upper end 224 of the second guide and a lower end of the second long bolt 221 is in contact with the metal rod 300. The height of the second long bolt 221 may be adjusted using a screwdriver or a wrench that fits into a screw head or a recess formed at an upper end 223 of the second long bolt 221 in order to level the metal rod 300.

In this way, the metal rod 300 may be brought into a state parallel to the base 100 by the first long bolt 211 and the second long bolt 221. When the weight 400 is dropped at this time, it is possible to prevent the metal rod 300 from tilting or bouncing up, and the amount of impact of the weight 400 applied to the metal rod 300 may be transferred to the cylindrical battery cell 10 without being dissipated.

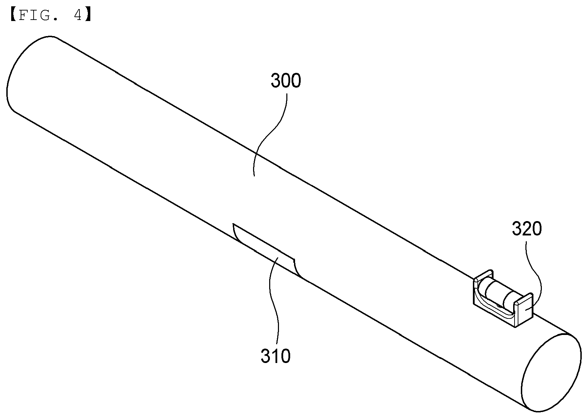

FIG. 4 is a perspective view showing the state in which a level is added to the metal rod 300 in FIG. 2.

Referring to FIG. 4, a level 320 is disposed on the outer surface of the metal rod 300. In the cylindrical battery cell impact test apparatus according to the present invention, since the first scale and the second scale are marked on the first guide and the second guide, respectively, the heights of opposite ends of the metal rod may be set to be the same. When the level 320 is further added as shown in FIG. 4, however, the metal rod may be leveled using the level 320.

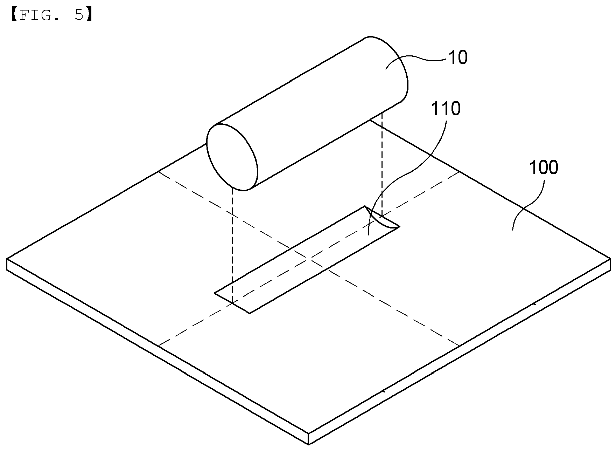

FIG. 5 is a perspective view of a base having a cylindrical battery cell mounting portion formed therein.

Referring to FIG. 5, the base 100 may include a mounting portion 110 having a recess corresponding to the outer surface of the cylindrical battery cell 10 so as to receive a lower part of the cylindrical battery cell 10.

When the impact test is performed by dropping the weight in the state in which at least a part of the lower part of the cylindrical battery cell 10 is received in the mounting portion 110, it is possible to prevent the cylindrical battery cell 10 from bouncing up due to the impact of the weight. However, results that differ from international standards may be obtained depending on whether or not the mounting portion 110 is provided, and the mounting portion 110 may be further added as long as statistically consistent results are observed.

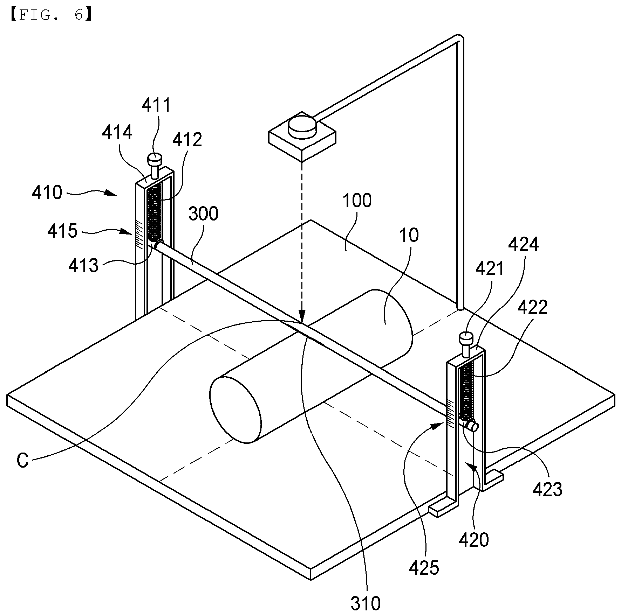

FIG. 6 is a perspective view of a cylindrical battery cell impact test apparatus according to a second embodiment of the present invention.

Referring to FIG. 6, in the cylindrical battery cell impact test apparatus according to the second embodiment, a first guide 410 and a second guide 420 respectively include a first up-and-down adjustment portion and a second up-and-down adjustment portion configured to adjust the height of a metal rod 300.

The first up-and-down adjustment portion includes a first elastic member 412 disposed above the metal rod 300 and a first adjustment portion 411 coupled to an upper part 414 of the first elastic member to adjust the length of the first elastic member 412. In addition, a first gripper 413 formed in a semi-cylindrical shape so as to cover a part of an outer surface of the metal rod 300, which has a cylindrical structure, is coupled to a lower part of the first elastic member 412. When the metal rod 300 is formed in the shape of a polygonal column, the shape of the first gripper 413 may be configured to correspond to the shape of the polygonal column so as to cover a part of the outer surface of the polygonal column in tight contact. When the first gripper 413 having the above configuration is provided, it is possible to effectively press the metal rod 300 irrespective of the shape of the metal rod 300.

The second up-and-down adjustment portion includes a second elastic member 422 disposed above the metal rod 300 and a second adjustment portion 421 coupled to an upper part 424 of the second elastic member to adjust the length of the second elastic member 422. In addition, a second gripper 423 formed in a semi-cylindrical shape so as to cover a part of the outer surface of the metal rod 300, which has a cylindrical structure, is coupled to a lower part of the second elastic member 422.

Each of the first elastic member 412 and the second elastic member 422 may be, for example, a spring, and the first adjustment portion 411 and the second adjustment portion 421 may press the first elastic member 412 and the second elastic member 422, respectively, such that the metal rod 300 is in tight contact with the first gripper 413 and the second gripper 423 and such that the metal rod 300 and the cylindrical battery cell 10 are in tight contact with each other.

A description of the first gripper 413 is equally applicable to the second gripper 423 of the second up-and-down adjustment portion.

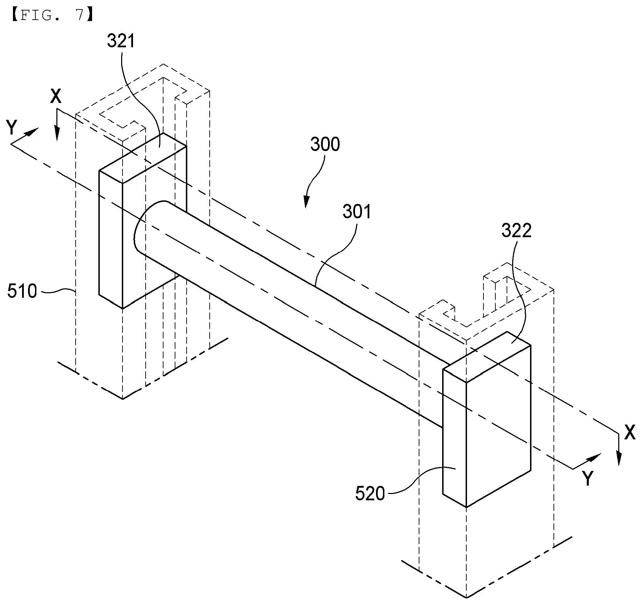

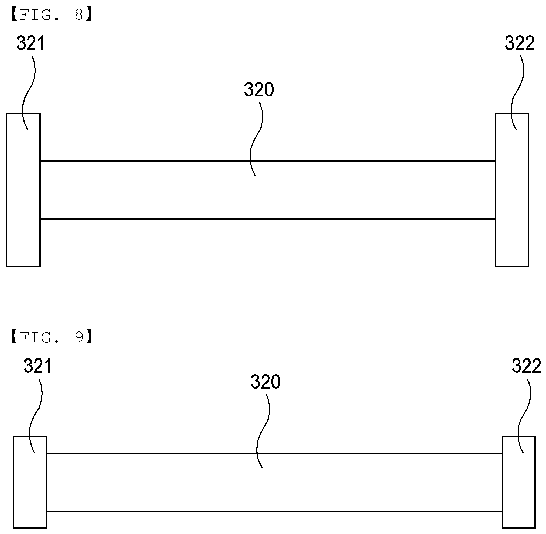

FIG. 7 is a perspective view of a metal rod according to a third embodiment of the present invention, FIG. 8 is a vertical sectional view of the metal rod, taken along X-X of FIG. 7, and FIG. 9 is a vertical sectional view of the metal rod, taken along Y-Y of FIG. 7.

Referring to FIGs. 7 to 9, the metal rod 300 according to the third embodiment includes a metal rod body 301 and a first guide movement portion 321 and a second guide movement portion 322 coupled respectively to opposite ends of the metal rod body 301.

The first guide movement portion 321 may be disposed in a space defined in a first guide 510 so as to be movable in the space in an upward and downward direction, and the second guide movement portion 322 may be disposed in a space defined in a second guide 520 so as to be movable in the space in the upward and downward direction.

Since the metal rod 300 according to the third embodiment includes the first guide movement portion 321 and the second guide movement portion 322, which move upward and downward along the spaces defined in the first guide 510 and the second guide 520, respectively, in a direction perpendicular to the base, the metal rod 300 may move upward and downward in a state of being parallel to the base.

In addition, although not shown in FIG. 7, an up-and-down movement portion shown in FIGs. 1 and 6 may be applied as a means configured to move each of the first guide movement portion 321 and the second guide movement portion 322 in the upward and downward direction.

In addition, although not shown in FIG. 7, a magnetic portion may be formed at the entirety of an outer surface of a metal rod body 301, or may be added only to a lower surface of a central portion of the metal rod body 301.

Each of the first guide movement portion 321 and the second guide movement portion 322 includes a flat upper surface. When a long bolt is used as an elastic member, therefore, a contact surface in contact with a lower surface of the long bolt may be formed as a plane parallel to the base. Consequently, it is possible to press the entirety of the contact surface with uniform force, and therefore the metal rod may be stably and effectively pressed.

When the present invention is used, as described above, the contact state between the metal rod and the cylindrical battery cell may be stably maintained, whereby the contact state between the magnetic portion of the metal rod and the side surface of the cylindrical battery cell may be maintained throughout the entire process of the step in which the weight is dropped onto the metal rod, and therefore it is possible to prevent the conventional problem that the force of the weight is not completely transferred to the cylindrical battery cell due to the bouncing up of the metal rod when the weight presses the metal rod.

In addition, since the weight is dropped while the metal rod is disposed in a horizontal state, the magnitude of the impact applied to the cylindrical battery cell may be kept uniform as long as the load and position of the weight are kept constant, whereby it is possible to improve reliability of the impact test. As such, the cylindrical battery cell impact test method according to the present invention and the cylindrical battery cell impact test apparatus therefor provide consistent results compared to the prior art.

Those skilled in the art to which the present invention pertains will appreciate that various applications and modifications are possible within the category of the present invention based on the above description.

### (Description of Reference Symbols)

10: Cylindrical battery cell
100: Base
110: Mounting portion
210, 410, 510: First guides
211: First long bolt
213: Upper end of first long bolt
214: Upper end of first guide
215: First scale
220, 420, 520: Second guides
221: Second long bolt
223: Upper end of second long bolt
224: Upper end of second guide
225: Second scale
300: Metal rod
301: Metal rod body
310: Magnetic portion
320: Level
321: First guide movement portion
322: Second guide movement portion
400: Weight
411: First adjustment portion
412: First elastic member
413: First gripper
414: Upper part of first elastic member
421: Second adjustment portion
422: Second elastic member
423: Second gripper
424: Upper part of second elastic member
C: Intersection

## Claims

1. A cylindrical battery cell impact test method comprising:
disposing a cylindrical battery cell such that a side surface of the cylindrical battery cell rests on a base;
disposing a metal rod above the side surface of the cylindrical battery cell; and
dropping a weight toward the metal rod,
**characterized in that** the method further comprises a magnetic portion added to an outer surface of the metal rod is disposed in contact with the side surface of the cylindrical battery cell.

2. The cylindrical battery cell impact test method according to claim 1, wherein opposite ends of the metal rod are disposed above the side surface of the cylindrical battery cell in a state of being mounted to a first guide and a second guide, respectively.

3. The cylindrical battery cell impact test method according to claim 1, wherein a central axis of the metal rod is disposed orthogonally to a central axis of the cylindrical battery cell.

4. The cylindrical battery cell impact test method according to claim 2, further comprising adjusting positions of the opposite ends of the metal rod by the first guide and the second guide such that distances from the opposite ends of the metal rod to the base are uniform.

5. The cylindrical battery cell impact test method according to claim 2, wherein:
the metal rod includes a first guide movement portion and a second guide movement portion at the opposite ends thereof, respectively, such that that the metal rod is movable upward and downward while the metal rod is maintained in a horizontal state, and
the first guide movement portion and the second guide movement portion move upward and downward along interiors of the first guide and the second guide, respectively.

6. The cylindrical battery cell impact test method according to claim 1, wherein the magnetic portion of the metal rod and the side surface of the cylindrical battery cell remain in contact throughout an entire process of the step in which the weight is dropped onto the metal rod.

7. A cylindrical battery cell impact test apparatus for a cylindrical battery cell impact test method according to any one of claims 1 to 5, the cylindrical battery cell impact test apparatus comprising:
a base configured for placement of a cylindrical battery cell on an upper surface thereof;
a metal rod disposable on a side surface of the cylindrical battery cell; and
a weight dropping toward the metal rod,
**characterized in that** the metal rod includes a magnetic portion at a central portion of the metal rod.

8. The cylindrical battery cell impact test apparatus according to claim 7, further comprising a first guide and a second guide mounted respectively to opposite ends of the metal rod, each of the first guide and the second guide being configured to adjust a height of the metal rod.

9. The cylindrical battery cell impact test apparatus according to claim 8, wherein each of the first guide and the second guide includes a scale for measuring the height of the metal rod.

10. The cylindrical battery cell impact test apparatus according to claim 8, wherein:
the opposite ends of the metal rod include a first guide movement portion and a second guide movement portion, respectively, such that that the metal rod is movable upward and downward while the metal rod is maintained in a horizontal state, and
the first guide movement portion and the second guide movement portion move upward and downward along interiors of the first guide and the second guide, respectively.

11. The cylindrical battery cell impact test apparatus according to claim 8, wherein:
each of the first guide and the second guide comprises an up-and-down adjustment portion configured to adjust the height of the metal rod, and
the up-and-down adjustment portion is configured as a long bolt disposed above the metal rod.

12. The cylindrical battery cell impact test apparatus according to claim 8, wherein:
each of the first guide and the second guide comprises an up-and-down adjustment portion configured to adjust the height of the metal rod, and
the up-and-down adjustment portion comprises an elastic member disposed above the metal rod and an adjustment portion provided at an upper part of the elastic member, the adjustment portion being configured to adjust a length of the elastic member.

13. The cylindrical battery cell impact test apparatus according to claim 7, wherein the metal rod includes a level located at an outer surface of the metal rod.

14. The cylindrical battery cell impact test apparatus according to claim 7, wherein the magnetic portion is a permanent magnet added to an outer surface of the metal rod or an electromagnet added to an outer surface of the metal rod.

15. The cylindrical battery cell impact test apparatus according to claim 7, wherein the base comprises a cylindrical battery cell mounting portion.

## Patentansprüche

1. Schlagprüfverfahren für eine zylindrische Batteriezelle, umfassend:
Anordnen einer zylindrischen Batteriezelle derart, dass eine Seitenfläche der zylindrischen Batteriezelle auf einer Basis ruht;
Anordnen eines Metallstabs über der Seitenfläche der zylindrischen Batteriezelle; und
Fallenlassen eines Gewichts in Richtung des Metallstabs,
**dadurch gekennzeichnet, dass** das Verfahren ferner umfasst, dass ein magnetischer Abschnitt, der zu einer Außenfläche des Metallstabs hinzugefügt ist, in Kontakt mit der Seitenfläche der zylindrischen Batteriezelle angeordnet wird.

2. Schlagprüfverfahren für eine zylindrische Batteriezelle nach Anspruch 1, wobei gegenüberliegende Enden des Metallstabs über der Seitenfläche der zylindrischen Batteriezelle in einem Zustand angeordnet werden, in dem sie an einer ersten Führung bzw. einer zweiten Führung montiert sind.

3. Schlagprüfverfahren für eine zylindrische Batteriezelle nach Anspruch 1, wobei eine Mittelachse des Metallstabs orthogonal zu einer Mittelachse der zylindrischen Batteriezelle angeordnet ist.

4. Schlagprüfverfahren für eine zylindrische Batteriezelle nach Anspruch 2, ferner umfassend das Einstellen von Positionen der gegenüberliegenden Enden des Metallstabs durch die erste Führung und die zweite Führung derart, dass Abstände von den gegenüberliegenden Enden des Metallstabs zur Basis gleichmäßig sind.

5. Schlagprüfverfahren für eine zylindrische Batteriezelle nach Anspruch 2, wobei:
der Metallstab einen ersten Führungsbewegungsabschnitt bzw. einen zweiten Führungsbewegungsabschnitt an seinen gegenüberliegenden Enden aufweist, derart, dass der Metallstab nach oben und nach unten bewegbar ist, während der Metallstab in einem horizontalen Zustand gehalten wird, und
der erste Führungsbewegungsabschnitt und der zweite Führungsbewegungsabschnitt sich entlang des Inneren der ersten Führung bzw. der zweiten Führung nach oben und nach unten bewegen.

6. Schlagprüfverfahren für eine zylindrische Batteriezelle nach Anspruch 1, wobei der magnetische Abschnitt des Metallstabs und die Seitenfläche der zylindrischen Batteriezelle während eines gesamten Prozesses des Schritts, in dem das Gewicht auf den Metallstab fallengelassen wird, in Kontakt bleiben.

7. Schlagprüfvorrichtung für eine zylindrische Batteriezelle für ein Schlagprüfverfahren für eine zylindrische Batteriezelle nach einem der Ansprüche 1 bis 5, wobei die Schlagprüfvorrichtung für eine zylindrische Batteriezelle umfasst:
eine Basis, die zum Platzieren einer zylindrischen Batteriezelle auf einer oberen Fläche davon konfiguriert ist;
einen Metallstab, der auf einer Seitenfläche der zylindrischen Batteriezelle angeordnet werden kann; und
ein Gewicht, das in Richtung des Metallstabs fällt,
**dadurch gekennzeichnet, dass** der Metallstab einen magnetischen Abschnitt an einem mittleren Abschnitt des Metallstabs aufweist.

8. Schlagprüfvorrichtung für eine zylindrische Batteriezelle nach Anspruch 7, ferner umfassend eine erste Führung und eine zweite Führung, die jeweils an gegenüberliegenden Enden des Metallstabs montiert sind, wobei jede der ersten Führung und der zweiten Führung konfiguriert ist, um eine Höhe des Metallstabs einzustellen.

9. Schlagprüfvorrichtung für eine zylindrische Batteriezelle nach Anspruch 8, wobei jede der ersten Führung und der zweiten Führung eine Skala zum Messen der Höhe des Metallstabs aufweist.

10. Schlagprüfvorrichtung für eine zylindrische Batteriezelle nach Anspruch 8, wobei:
die gegenüberliegenden Enden des Metallstabs einen ersten Führungsbewegungsabschnitt bzw. einen zweiten Führungsbewegungsabschnitt aufweisen, derart, dass der Metallstab nach oben und nach unten bewegbar ist, während der Metallstab in einem horizontalen Zustand gehalten wird, und
der erste Führungsbewegungsabschnitt und der zweite Führungsbewegungsabschnitt sich entlang des Inneren der ersten Führung bzw. der zweiten Führung nach oben und nach unten bewegen.

11. Schlagprüfvorrichtung für eine zylindrische Batteriezelle nach Anspruch 8, wobei:
jede der ersten Führung und der zweiten Führung einen Auf- und Abwärtseinstellabschnitt umfasst, der konfiguriert ist, um die Höhe des Metallstabs einzustellen, und
der Auf- und Abwärtseinstellabschnitt als ein langer Bolzen konfiguriert ist, der über dem Metallstab angeordnet ist.

12. Schlagprüfvorrichtung für eine zylindrische Batteriezelle nach Anspruch 8, wobei:
jede der ersten Führung und der zweiten Führung einen Auf- und Abwärtseinstellabschnitt umfasst, der konfiguriert ist, um die Höhe des Metallstabs einzustellen, und
der Auf- und Abwärtseinstellabschnitt ein elastisches Element, das über dem Metallstab angeordnet ist, und einen Einstellabschnitt, der an einem oberen Teil des elastischen Elements bereitgestellt ist, umfasst, wobei der Einstellabschnitt konfiguriert ist, um eine Länge des elastischen Elements einzustellen.

13. Schlagprüfvorrichtung für eine zylindrische Batteriezelle nach Anspruch 7, wobei der Metallstab eine Ebene aufweist, die sich an einer Außenfläche des Metallstabs befindet.

14. Schlagprüfvorrichtung für eine zylindrische Batteriezelle nach Anspruch 7, wobei der magnetische Abschnitt ein Permanentmagnet, der zu einer Außenfläche des Metallstabs hinzugefügt ist, oder ein Elektromagnet, der zu einer Außenfläche des Metallstabs hinzugefügt ist, ist.

15. Schlagprüfvorrichtung für eine zylindrische Batteriezelle nach Anspruch 7, wobei die Basis einen Montageabschnitt für eine zylindrische Batteriezelle umfasst.

## Revendications

1. Procédé d'essai à impact pour un élément de batterie cylindrique comprenant :
l'agencement d'un élément de batterie cylindrique de sorte qu'une surface latérale de l'élément de la batterie cylindrique repose sur une embase ;
l'agencement d'une tige métallique au-dessus de la surface latérale de l'élément de batterie cylindrique ; et
la chute d'une masse vers la tige métallique,
**caractérisé en ce que** le procédé comprend en outre une partie magnétique ajoutée à une surface extérieure de la tige métallique, disposée au contact de la surface latérale de l'élément de batterie cylindrique.

2. Procédé d'essai à impact pour un élément de batterie cylindrique selon la revendication 1, des bouts opposés de la tige métallique étant disposés au-dessus de la surface latérale de l'élément de batterie cylindrique de manière à être montés sur un premier guide et un deuxième guide, respectivement.

3. Procédé d'essai à impact pour un élément de batterie cylindrique selon la revendication 1, un axe central de la tige métallique étant disposé perpendiculairement à un axe central de l'élément de batterie cylindrique.

4. Procédé de test d'impact pour un élément de batterie cylindrique selon la revendication 2, comprenant en outre le réglage des positions des bouts opposés de la tige métallique par le premier guide et le deuxième guide, afin que les distances entre les bouts opposés de la tige métallique et l'embase soient uniformes.

5. Procédé d'essai à impact pour un élément de batterie cylindrique selon la revendication 2,
la tige métallique comprenant une partie de déplacement du premier guide et une partie de déplacement du deuxième guide à leurs extrémités opposées, respectivement, de sorte que la tige métallique puisse être déplacée en haut et en bas, la tige métallique étant maintenue à l'état horizontal, et
la partie de déplacement du premier guide et la partie de déplacement du deuxième guide se déplaçant en haut et en bas le long de l'intérieur du premier guide et du deuxième guide, respectivement.

6. Procédé d'essai à impact pour un élément de batterie cylindrique selon la revendication 1, la partie magnétique de la tige métallique et la surface latérale de l'élément de batterie cylindrique restant en contact tout au long d'un processus intégral de l'étape où l'on procède à la chute de la masse sur la tige métallique.

7. Appareil d'essai à impact pour un élément de batterie cylindrique, pour un procédé d'essai à impact pour élément de batterie cylindrique selon une quelconque des revendications 1 à 5, l'appareil d'essai à impact pour un élément de batterie cylindrique comprenant :
une embase configurée pour le positionnement d'un élément de batterie cylindrique sur une surface supérieure de celle-ci ;
une tige métallique pouvant être disposée sur une surface latérale de l'élément de la batterie cylindrique ; et
une masse tombant vers la tige métallique,
**caractérisé en ce que** la tige métallique comprend une partie magnétique dans une partie centrale de la tige métallique.

8. Appareil d'essai à impact pour élément de batterie cylindrique selon la revendication 7, comprenant en outre un premier guide et un deuxième guide montés respectivement sur des bouts opposés de la tige métallique, chacun du premier guide et du deuxième guide étant configuré pour régler une hauteur de la tige métallique.

9. Appareil d'essai à impact pour élément de batterie cylindrique selon la revendication 8, chacun du premier guide et du deuxième guide comprenant une échelle pour mesurer la hauteur de la tige métallique.

10. Appareil d'essai à impact pour élément de batterie cylindrique selon la revendication 8,
les bouts opposés de la tige métallique comprenant une partie de déplacement du premier guide et une partie de déplacement du deuxième guide, respectivement, de sorte que la tige métallique puisse être déplacée en haut et en bas, la tige métallique étant maintenue à l'état horizontal, et
la partie de déplacement du premier guide et la partie de déplacement du deuxième guide se déplaçant en haut et en bas le long de l'intérieur du premier guide et du deuxième guide, respectivement.

11. Appareil d'essai à impact pour élément de batterie cylindrique selon la revendication 8,
chacun du premier guide et du deuxième guide comprenant une partie de réglage en haut et en bas configurée pour ajuster la hauteur de la tige métallique, et
la partie de réglage en haut et en bas étant configurée sous forme d'un long boulon disposé au-dessus de la tige métallique.

12. Appareil d'essai à impact pour élément de batterie cylindrique selon la revendication 8,
chacun du premier guide et du deuxième guide comprenant une partie de réglage en haut et en bas configurée pour ajuster la hauteur de la tige métallique, et
la partie de réglage en haut et en bas comprenant un élément élastique disposé au-dessus de la tige métallique et une partie de réglage agencée dans une partie supérieure de l'élément élastique, la partie de réglage étant configurée pour ajuster une longueur de l'élément élastique.

13. Appareil d'essai à impact pour élément de batterie cylindrique selon la revendication 7, la tige métallique comprenant un niveau situé sur une surface extérieure de la tige métallique.

14. Appareil d'essai à impact pour élément de batterie cylindrique selon la revendication 7, la partie magnétique est un aimant permanent ajouté à une surface extérieure de la tige métallique ou un électroaimant ajouté à une surface extérieure de la tige métallique.

15. Appareil d'essai à impact pour élément de batterie cylindrique selon la revendication 7, l'embase comprenant une partie de montage pour élément de batterie cylindrique.
